# EUROPEAN PATENT SPECIFICATION

(11) **EP 4 162 189 B1**
(45) Date of publication and mention of the grant of the patent: **24.06.2026**
(21) Application number: 21732773.3
(22) Date of filing: 25.05.2021
(51) Int. Cl.: F16L 57/02

(54) **TUBING SUPPORT DEVICE IN COMBINATION WITH A TUBING AND METHOD OF MANUFACTURE**
ROHRSTÜTZUNGSVORRICHTUNG IN KOMBINATION MIT EINEM ROHR UND VERFAHREN ZUR HERSTELLUNG
DISPOSITIF DE SUPPORT DE TUBE EN COMBINAISON AVEC UN TUBE ET PROCÉDÉ DE FABRICATION

(30) Priority: 05.06.2020 US 202063035439 P
(43) Date of publication of application: 12.04.2023
(73) Proprietor: Amgen Inc., Thousand Oaks, CA 91320 (US)
(72) Inventor: SHOEMAKER, Kenneth, Thousand Oaks, CA 91320-1799 (US); ANSON, Jonathan, Thousand Oaks, CA 91320-1799 (US); WYLIE, Bret, Thousand Oaks, CA 91320-1799 (US); HUNTER, Glenn, M., Thousand Oaks, CA 91320-1799 (US); BROWN, Sperry, K., Thousand Oaks, CA 91320-1799 (US)
(74) Representative: J A Kemp LLP
(86) International application number: PCT/US2021/034003
(87) International publication number: WO 2021/247282

(56) References cited:
- DE-U1- 9 316 988
- US-A1- 2009 095 847
- US-A1- 2018 003 305
- US-A1- 2018 209 577
- US-A1- 2020 103 052
- US-B1- 6 450 551

## Description

### FIELD OF DISCLOSURE

The field of disclosure relates to tubing used in drug substance manufacturing systems and, more particularly, to a tubing support device for reinforcing the tubing and a method of manufacturing the same.

### BACKGROUND

Drug substance manufacturing often requires the use of demanding high pressure processes. Welded tubing pressure has been a limiting factor for several drug substance manufacturing systems. Welding during manufacturing is a critical component to rapid development of drug substances using a multitude of buffers, cassettes, and columns. Specifically, tubing is typically welded during processing as a way to make sterile connections for fluid transfer. However, the current maximum allowable pressure is approximately 15 PSI for the welds, regardless of tubing type, which limits other drug substance manufacturing system components. US 2018/003305 discloses a fluid management system for handling pressurized fluid.

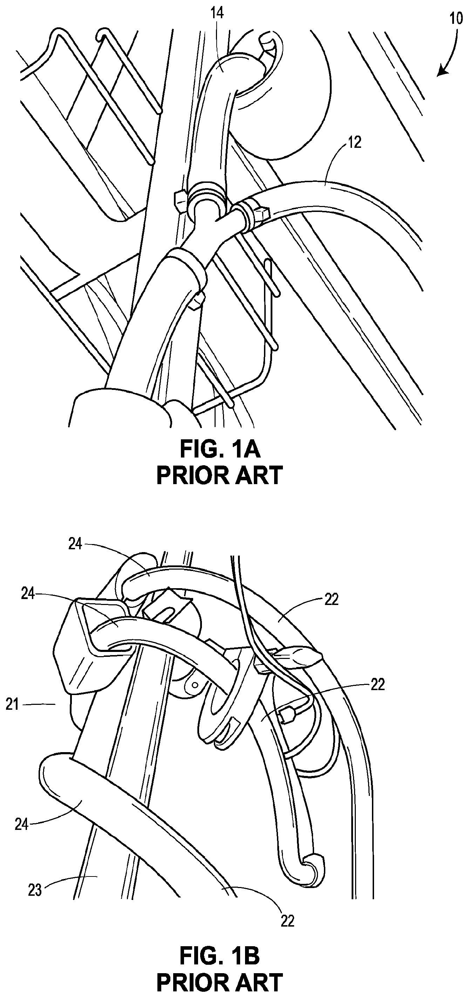

Some drug substance manufacturing systems include a bioreactor system 10 having several nutritional feed lines 12 going into a bioreactor, as depicted in FIG. 1A. However, the lines 12 and other tubes often kink due to placement. For example, a single-use (SU) air-break tube 14 is critical to the function of the bioreactor system in its support of keeping a permeate line clean. For example, when a pump to the bioreactor is turned off, bacteria have the potential to flow in a reverse direction from the permeate line. The air-break tube 14 prevents the backflow of bacteria, allows proper flow of liquid while the pump(s) is activated, and prevents any unwanted siphoning of liquid forward. Current bioreactor equipment placement and environmental factors make elevating the air-break tube 14 and other tubing lines 12 less than ideal, as the air-break tube 14 and lines 12 often kink as a result of their hanging positions.

Other feed lines have impingements due to placement within the drug manufacturing systems. For example, and as depicted in FIG. 1B, several nutritional feed lines 22 (e.g., going into a reactor 21 of the bioreactor system 10) have flexible gamma irradiated lines, such as in single-use reactors, that are draped over a stainless steel bar 23 attached to the reactor 21. These lines 22 may carry media, base, antifoam, and/or glucose, for example. However, this arrangement can cause impingements in the lines 22, such as at impingement points 24.

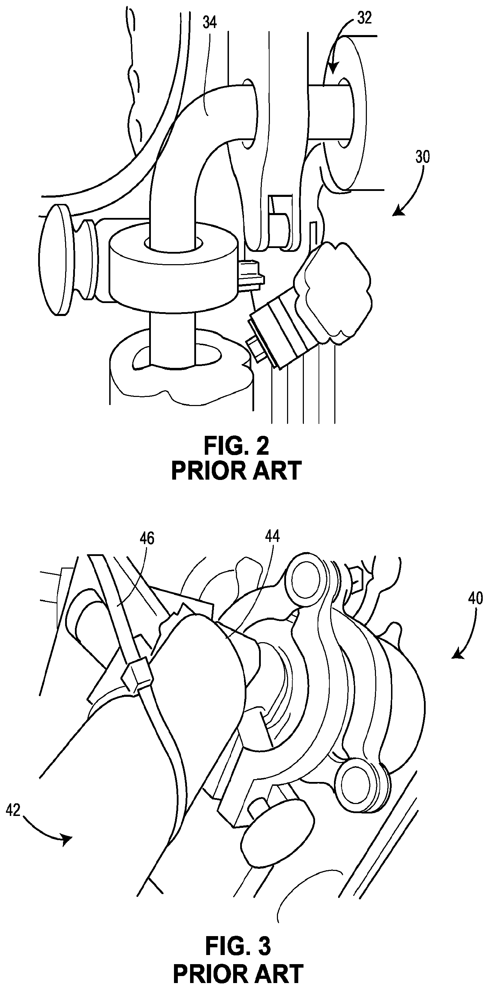

Further, some conventional single-use bioreactors are now being equipped with single use ATF filtration systems. For example, FIG. 2 depicts a portion of another conventional single-use bioreactor system 30 using an ATF filtration system. However, a top assembly 32 with an attached elbow piece 34 still needs to be autoclaved, e.g., steam sterilized by heat, as the elbow piece 34 is typically made from stainless steel and connected in a non-sterile fashion. Because autoclaving is not as efficient as using single-use connector assemblies, a single-use connector assembly is alternatively used.

A bioreactor system 40 including a single-use connector assembly 42 having gamma irradiated flexible tubing 44 is depicted in FIG. 3. Often the gamma irradiated flexible tubing 44 does not have the mechanical strength to support itself when connected to a reactor of the bioreactor system 40. As a result, the flexible tubing 44 often must be supported by other structures, such as additional tubing and zip ties 46, which also limits high operating pressures during drug manufacturing.

Thus, while single-use processing equipment has many advantages including the use of sterile, single-use flexible lines, these flexible lines do not possess the same mechanical strength as more conventional stainless steel lines, for example.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes. One aspect of the present disclosure includes a tubing support device for tubing of a drug manufacturing system in combination with such a tubing. The tubing support device comprises a body having a first end, a second end, and a plurality of projections. The plurality of projections includes a first projection disposed at the first end and a second projection disposed at the second end, each of the first and second projections including an aperture adapted to receive a fastener. A bore extends from the first end to the second end of the body, and the bore is adapted to receive tubing such that the body reinforces the tubing, allowing the tubing to contain fluids at high pressures and/or preventing kinking in the tubing.

Another aspect of the present disclosure includes a drug manufacturing system. The drug manufacturing system comprises one or more manufacturing components and one or more fluid lines fluidly coupled to the one or more manufacturing components. The one or more fluid lines include tubing having a tubing support device. The tubing support device includes a body having a first end, a second end, and a plurality of projections. The plurality of projections includes a first projection disposed at the first end and a second projection disposed at the second end, each of the first and second projections including an aperture adapted to receive a fastener. A bore extends from the first end to the second end of the body, and the bore is adapted to receive tubing such that the body reinforces the tubing, allowing the tubing to contain fluids at high pressures and/or preventing kinking in the tubing.

Another aspect of the present disclosure includes a method of manufacturing a tubing support device for a drug manufacturing system. The method comprises forming a body including a bore and a plurality of projections, the bore extending along a length of the body and adapted to receive tubing of a drug manufacturing system for reinforcing the tubing and/or preventing kinking of the tubing during high pressure operations. The method further comprises forming an aperture in at least one projection of the plurality of projections.

Each of the foregoing exemplary aspects of the present disclosure may further include any one or more of the following features. For example, the body may further include a first body part and a second body part coupled to the first body part. Each of the first and second body parts may include a first end, a second end, a first projection disposed on the first end, and a second projection disposed on the second end. Each of the projections may include an aperture.

In some further aspects, the second body part may be complementary in shape to the first body part, such that the apertures of the first and second projections of the second body part are aligned with the apertures of the first and second projections of the first body part when the first and second body parts are coupled together.

In some other aspects, the body is a sheath and includes a C-shape. The first body part may include a first half of the sheath, and the second body part may include a second half of the sheath. Each of the first and second body parts may have the same shape and form the bore when coupled together.

In other aspects, the body may further include a first tab disposed at the first end of the body and a second tab disposed at the second end of the body. Each of the first and second tabs may have a slot adapted to receive a fastener for hanging the body, elevating the tubing adapted to be received within the bore of the body and preventing kinking of the tubing.

In another aspect, the plurality of projections may further include a third projection upwardly extending from a center portion of the body. The third projection may also include an aperture adapted to receive a fastener.

According to other aspects, the body may include a sleeve having a cylindrical shape. In addition, the body may include an inside surface having a gripping system adapted to contact the welded tubing for additional securement of the welded tubing within the bore. The gripping system may include a first array of teeth disposed on the inside surface near the first end of the body and a second array of teeth disposed on the inside surface near the second end of the body.

In some aspects, at least one tooth of the first and second arrays of teeth may include a base having a first side inwardly extending from the base and a second side inwardly extending from the base. The first and second sides may form an edge for gripping the welded tubing when the welded tubing is disposed within the bore.

In some other aspects, the first and second arrays of teeth may each extend around the inside surface of the bore near each of the first and second ends of the body, forming an annular first array of teeth and an annular second array of teeth.

In still other aspects, the body may include a sleeve and an inside surface having a plurality of ridges adapted to contact the tubing for additional securement of the tubing within the body. In addition, the inside surface may include a first plurality of ridges disposed on the inside surface near the first end of the body and a second plurality of ridges disposed on the inside surface near the second end of the body. Each of the first and second plurality of ridges may contact the tubing for additional securement of the tubing within the body.

In yet another aspect, the body may include a first plurality of ridges disposed near a first end of the body and a second plurality of ridges disposed near a second end of the body.

In other aspects, the body may include an additively manufactured body comprising an additively manufactured first body part and an additively manufactured second body part coupled to the additively manufactured first body part.

In yet another aspect, forming a body including a bore and a plurality of projections may comprise forming a body including a bore and a plurality of projections using an additively manufacturing technique.

In another aspect, forming a body including a bore and a plurality of projections may comprise forming a first body part having a first end, a second end, a first projection disposed on the first end, and a second projection disposed on the second end, the first body part being a first half of the body. In addition, the method may further include forming a second body part having a first end, a second end, a first projection disposed on the first end, and a second projection disposed on the second end, the second body part being a second half of the body.

In yet another aspect, forming a body including a bore and a plurality of projections may further comprise forming a first tab disposed at a first end of the body and a second tab disposed at the second end of the body, and forming a slot in each of the first and second tabs, the slot for receiving a fastener for hanging the body.

In yet another aspect, forming the body including a bore and a plurality of projections may comprise forming a body having an inside surface with a gripping system having a first array of teeth disposed near a first end of the body and a second array of teeth disposed on the inside surface near the second end of the body, disposing each of the first and second arrays of ribs around the inside surface of the body.

### BRIEF DESCRIPTION OF THE DRAWINGS

The features of this invention which are believed to be novel are set forth with particularity in the appended claims. The invention may be best understood by reference to the following description taken in conjunction with the accompanying drawings, in which like reference numerals identify like elements in the several FIGS., in which:
FIG. 1A is a perspective view of a portion of a conventional drug substance manufacturing system having several nutritional feed lines going into a bioreactor;
FIG. 1B is another perspective view of additional lines of the conventional drug substance manufacturing system of FIG. 1A;
FIG. 2 is another perspective view of a portion of a conventional single-use bioreactor system using a filtration system;
FIG. 3 is another perspective view of a portion of a conventional bioreactor system including a single-use connector assembly having gamma irradiated flexible tubing;
FIG. 4A is a block diagram of an exemplary drug manufacturing system including a tubing support device according to an aspect of the present disclosure;
FIG. 4B is a perspective view of exemplary welded tubing of the drug manufacturing system of FIG. 4A;
FIG. 5 is a perspective view of a tubing support device according to an aspect of the present disclosure;
FIG. 6 is a side view of a first body part of the tubing support device of FIG. 5;
FIG. 7 is a side view of a second body part of the tubing support device of FIG. 5;
FIG. 8 is a perspective view of the tubing support device of FIG. 5, the tubing support device having fasteners attached thereto;
FIG. 9 is a front view of another tubing support device according to another aspect of the present disclosure;
FIG. 10 is a sectional view of the tubing support device of FIG. 9, taken along the line 10-10 of FIG. 11;
FIG. 11 is side view of the tubing support device of FIG. 9;
FIG. 12 is a perspective view of a portion of the tubing support device of FIG. 9;
FIG. 13A is a front perspective view of another tubing support device according to another aspect of the present disclosure;
FIG. 13B is a disassembled view of the tubing support device of FIG. 13A;
FIG. 14 is a perspective view of the tubing support device of FIG. 13A and another tubing support device according to the same aspects of the tubing support device of FIG. 13A, except having different dimensions;
FIG. 15A is a perspective view of an exemplary experimental set-up, using the tubing support device of FIG. 13A and zip ties for additional reinforcement;
FIG. 15B is a perspective view of a portion of the zip ties of the exemplary experimental set-up of FIG. 15A;
FIG. 16A is a perspective view of another exemplary experimental set-up, using the tubing support device of FIG. 13A and a thermoplastic sleeve for additional reinforcement;
FIG. 16B is a perspective view of the thermoplastic sleeves used with the experimental set-up of FIG. 16A;
FIG. 17A is a perspective view of another exemplary experimental setup, using the tubing support device of FIG. 13A and barblocks for additional reinforcement;
FIG. 17B is a perspective view of exemplary barblocks used with the experimental setup of FIG. 17A;
FIG. 17C is a perspective view of a barblock disposed on tubing and used with the experimental set-up of FIG. 17A;
FIG. 18 is a block diagram of a system for additively manufacturing the tubing support device of the present disclosure; and
FIG. 19 is another block diagram depicting components of the system of FIG. 18.

### DETAILED DESCRIPTION

A tubing support device, such as one of a tubing sleeve or a tubing sheath, has been designed to reinforce tubing used in drug manufacturing systems, such as single-use manufacturing systems and single-use flow kits. The tubing support device of the present disclosure has allowed tubing to contain fluid significantly higher pressures, enabling tubing to be commonly used in future single use manufacturing systems. In addition to enhancing the pressure rating, the tubing support device also elevates tubing off of another surface to enhance sterility and prevent kinking in the tubing. Specifically, and in one example, the tubing support device includes a body having a plurality of projections including a first projection disposed at a first end of the body and a second projection disposed at a second end of the body. Each of the first and second projections include an aperture to receive a fastener, and, thus, secure the tubing support device around the tubing. A bore extends along a length of the body and is adapted to receive the tubing, such that the body reinforces the tubing, thereby allowing the tubing to contain fluids at higher pressures than other conventional reinforcement devices and/or preventing kinking in the tubing. Due to manufacturing techniques, such as additive manufacturing, and materials used, the tubing support device is also about half the size and up to nearly 40% lighter in weight than conventional weld reinforcements.

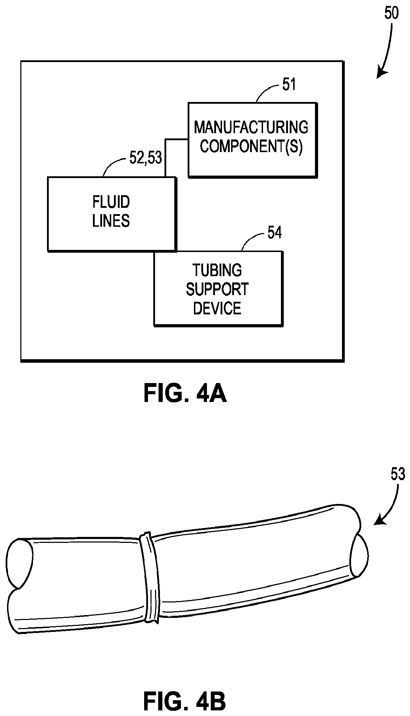

Referring now to FIG. 4A, an exemplary drug manufacturing system 50 is depicted. The exemplary drug manufacturing system 50 may include any drug substance manufacturing system having one or more manufacturing components 51 and one or more fluid lines 52 fluidly coupled to the one or more manufacturing components 51. The one or more fluid lines 52 may include tubing 53 having a tubing support device 54 in accordance with the present disclosure. The tubing 53 of the one or more fluid lines 52 may include flexible tubing, welded tubing, as depicted in FIG. 4B, and/or any other tubing that may be used with and/or coupled to the one or more manufacturing components 51 of the drug manufacturing system 50. In single-use processing, the tubing is typically welded as a way to make sterile connections for fluid transfer in the drug manufacturing system 50. As will be appreciated, various other designs of welded tubing different from that depicted in FIG. 4B may alternatively be used and still fall within the scope of the present disclosure. As will also be appreciated, the tubing 53 may be fluidly coupled to various manufacturing components 51 disposed throughout the drug manufacturing system 50. The tubing support device 54 of the present disclosure may be disposed around the tubing 53 to reinforce the tubing 53, as explained below.

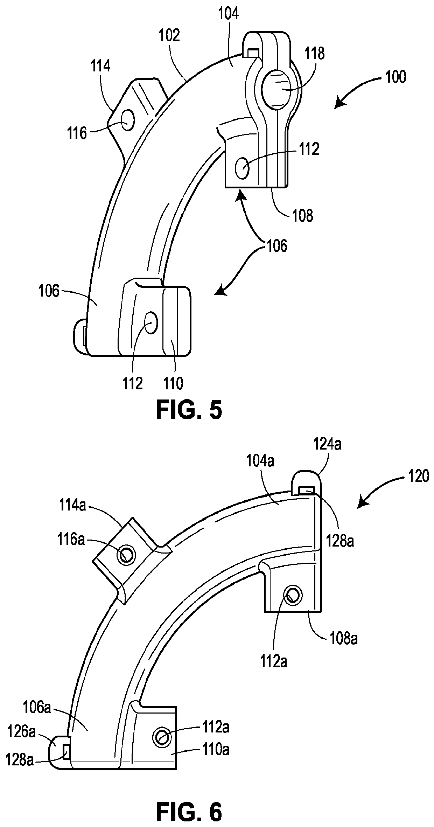

According to an aspect of the present disclosure, the tubing support device 54 includes a tubing support device 100, as depicted in FIG. 5. The tubing support device 100 includes a body 102 having a first end 104 and a second end 106. The body 102 also includes a plurality of projections 106 including a first projection 108 disposed at the first end 104 and a second projection 110 disposed at the second end 106. Each of the first and second projections 108, 110 includes an aperture 112 adapted to receive a fastener, as described more below. In addition, the plurality of projections 106 may further include a third projection 114 upwardly extending from a center portion the body 102. Like the first and second projections 108, 110, the third projection 114 also includes an aperture 116 for receiving a fastener, as also described more below. A bore 118 extends along a length of the body 102, from the first end 104 to the second end 106. The bore 118 is adapted to receive the tubing, such that the body 102 reinforces the tubing, thereby allowing the tubing to contain fluids at high pressures and/or preventing kinking in the tubing.

In one example, the first projection 108 downwardly and inwardly extends from the first end 104 of the body 102. In addition, the second projection 110 inwardly extends from the second end 106 of the body 102. Further, and in this example, the body 102 is a sheath and includes a rounded shape, such as a C-shape, with the first end 104 disposed above the second end 106, for example.

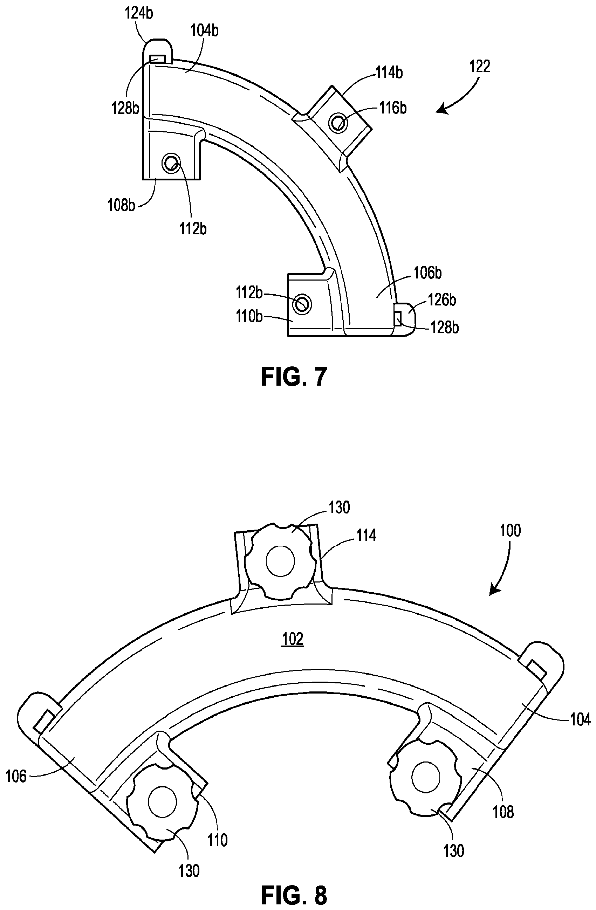

Referring now to FIGS. 6 and 7, the body 102 further includes an first body part 120 (FIG. 6) and a second body part 122 (FIG. 7) that is adapted to be coupled to the first body part 120 to form the body 102 of FIG. 5. As depicted in FIG. 6, the first body part 120 includes a first end 104a, a second end 106a, a first projection 108a disposed on the first end 104a, and a second projection 110a disposed on the second end 106a. Each of the first and second projections 108a, 110a includes an aperture 112a adapted to receive a fastener, as explained more below. A third projection 114a extends from a center area of the first body part 120 and also includes an aperture 116a for receiving a fastener. As depicted in FIG. 7, the second body part 122 likewise includes a first end 104b, a second end 106b, a first projection 108b disposed on the first end 104b, and a second projection 110b disposed on the second end 106b. Each of the first and second projections 108b, 110b of the second body part 122 also includes an aperture 112b. A third projection 114b extends from a center area of the second body part 122 and includes an aperture 116b for receiving a fastener.

The second body part 122 is complementary in shape to the first body part 120, as depicted in FIGS. 6 and 7, for example. In one example, each of the first and second body parts 120, 122 of the body 102 is rounded in shape, such as a C-shape. It will be understood that the first and second body parts 120, 122 may alternatively take the form of various other shapes and still fall within the scope of the present disclosure. At least because the first and second body parts 120, 122 are complementary in shape, e.g., have the same shape, the apertures 112a of the first and second projections 108a, 110a of the first body part 120 align with the apertures 112b of the first and second projections 108b, 110b of the second body part 122 when the first and second body parts 120, 122 are coupled together. This allows a fastener to be disposed in the first apertures 112a of the first body part 120 and through the apertures 112b of the second body part 122 to secure the first and second body parts 120, 122 together, as explained below.

In this example, the body 102 of the tubing support device 100 is a sheath, and the first body part 120 is a first half of the sheath and the second body part 122 is the second half of the sheath. When the first and second body parts 120, 122 are coupled together, the first and second body parts 120, 122 of the body 102 form the bore 118 adapted to receive the tubing 52, as depicted in FIG. 5.

As further depicted in FIGS. 6 and 7, each of the first and second body parts 120, 122 includes a first tab 124a, 124b, respectively, disposed at the first end 104a, 106b, and a second tab 126a, 126b disposed at the second end 104b, 106b. Each of the first tabs 124a, 124b includes a slot 128a, 128b adapted to receive fastener, and each of the second tabs 126a, 126b includes the slot 128a, 128b also adapted to receive a fastener. Thus, the first and second tabs 124a, 124b, 126a, 126b allow tubing disposed within the bore 118 of the body 102 to be elevated and prevent kinking of the tubing.

Referring now to FIG. 8, the tubing support device 100 of FIGS. 5-7 is depicted with fasteners 130 disposed in each projection 108, 110, 114. Specifically, the fasteners 130 are disposed within and through the apertures 112, 112a, 112b (FIGS. 5-7) disposed in each projection 108, 110, 114 to couple the first body part 120 (FIG. 6) to the second body part 122 (FIG. 7) together, for example. In one example, the fasteners 130 are screws that fasten the first and second body parts 120, 122 together and around the welded tubing. In this example, there are three screws 130. It will be appreciated that various other fasteners capable of securing the first body part 120 to the second body part 122 (e.g., to assemble the body 102 of the tubing support device 100) may alternatively be used and still fall within the scope of the present disclosure.

In one example, the body 102 of the tubing support device 100 includes an additively manufactured body 102. The first body part 120 is an additively manufactured first body part 120, and the second body part 122 is likewise an additively manufactured second body part 122. The additively manufactured body 102 and the additively manufactured first and second body parts 120, 122 may be additively manufactured accordingly to any known additive manufacturing technique, such as using as 3D printer, as described more below. Alternatively, the body 102 of the tubing support device 100 may be made by injection molding, casting, or any other readily available and known manufacturing process and still fall within the scope of the present disclosure.

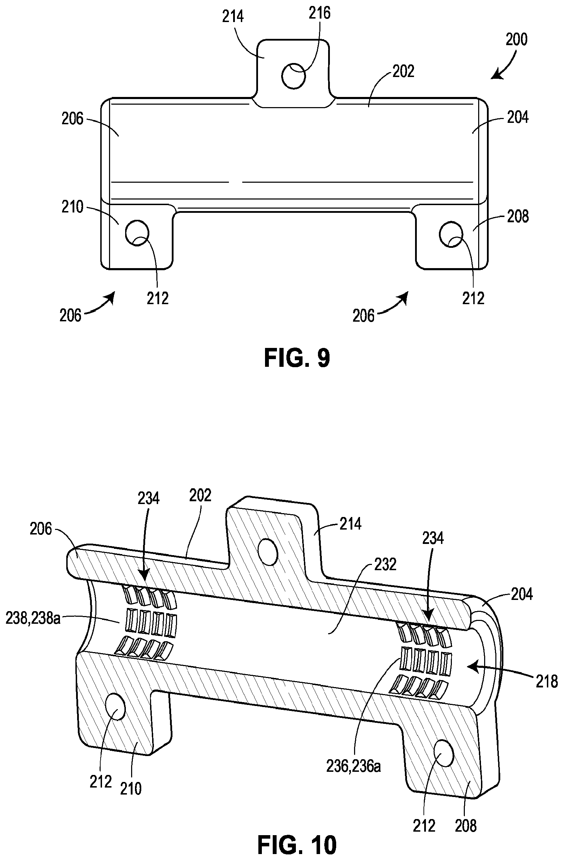

Referring now to FIGS. 9-12 another tubing support device 200 according to another aspect of the present disclosure is depicted. The tubing support device 200 includes many features similar to or the same as the tubing support device 100 of FIGS. 5-8. Thus, parts of the tubing support device 200 that are the same as parts of the tubing support device 100 are numbered 100 more than the parts of the tubing support device 100. Unlike the tubing support device 100 of FIGS. 5-8, which includes a C-shape design, for example, the tubing support device 200 is a sleeve and includes a rectangular, cylindrical shape. In addition, the tubing support device 200 may include a single part. Further differences between the tubing support device 200 and the tubing support device 100 will be further described and understood below.

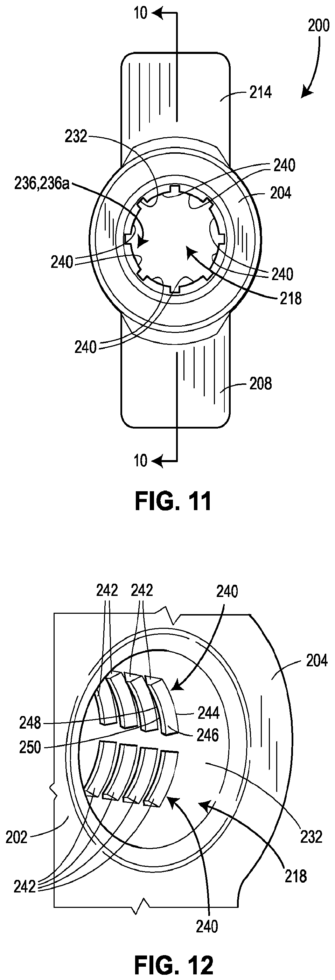

Referring now to FIG. 9, the a tubing support device 200 includes a body 202 having a first end 204 and a second end 206. The body 102 also includes a plurality of projections 206 including a first projection 208 disposed at the first end 204 and a second projection 210 disposed at the second end 206. Each of the first and second projections 208, 210 includes an aperture 212 adapted to receive a fastener, such as the fastener 130 described above relative to the tubing support device 100. In addition, the plurality of projections 206 may further include a third projection 214 upwardly extending from a center portion the body 202. Like the first and second projections 208, 210, the third projection 214 also includes an aperture 216 for receiving a fastener, such as the fastener 130. As depicted in FIGS. 10 and 11, a bore 218 extends along a length of the body 202, from the first end 204 to the second end 206. The bore 218 is adapted to receive the tubing such that the body 202 reinforces the tubing, allowing the tubing to contain fluid at increased pressures and/or preventing kinking in the tubing. In one example, the first projection 208 downwardly extends from the first end 204 of the body 202. In addition, the second projection 210 likewise downwardly extends from the second end 206 of the body 202.

Referring now to FIG. 10, the body 202 of the tubing support device 200 further includes an inside surface 232 having a gripping system 234 adapted to contact the tubing (when the tubing is disposed within the tubing support device 200) and to further secure the tubing within the bore 218. The gripping system 234 includes a first array of teeth 236 disposed on the inside surface 232 near the first end 204 of the body 202. The gripping system 234 further includes a second array of teeth 238 disposed on the inside surface 232 near the second end 206 of the body 202. The first and second arrays of teeth 236, 238 extend around the inside surface 232 of the body 202, forming an annular first array of teeth 236a and an annular second array of teeth 238a. For example, FIG. 11 depicts the first array of teeth 236 extending around the entire inside surface 232 of the body 202 at the first end 204. In a similar manner, the second array of teeth 238 likewise extends around the entire inside surface 232 of the body 202 at the second end 204. In one example, and as depicted in FIG. 11, the first array of teeth 236, 236a includes eight rows 240 of teeth spaced equidistantly around the inside surface 232 of the body 202.

In addition, and referring now to FIG. 12, each row 240 of teeth may include four teeth 242, and each tooth 242 includes a base 242 having a first side wall 244 inwardly and upwardly extending from the base 242 and a second side wall 246 also inwardly and upwardly extending from the base 242. The first and second side walls 246, 248 of each tooth 242 form an edge 250, which grips the tubing when the tubing is disposed within the bore 218 of the body 202. While these features have been described relative to one tooth 242 of the two arrays of the teeth 236, 238 (FIG. 10), it will be understood that more than one tooth 242 and/or all teeth include the same shape and features. Alternatively, each tooth 242 may take the form of any other different shape and/or have fewer or more teeth in each array and still fall within the scope of present disclosure.

In one example, and like the tubing support device 100, the body 202 of the tubing support device 200 may also include an additively manufactured body 202. The body 202 be additively manufactured accordingly to any known additive manufacturing technique, such as using as 3D printer. Alternatively, the body 202 of the tubing support device 200 may be made by injection molding, casting, or any other readily available and known manufacturing process and still fall within the scope of the present disclosure.

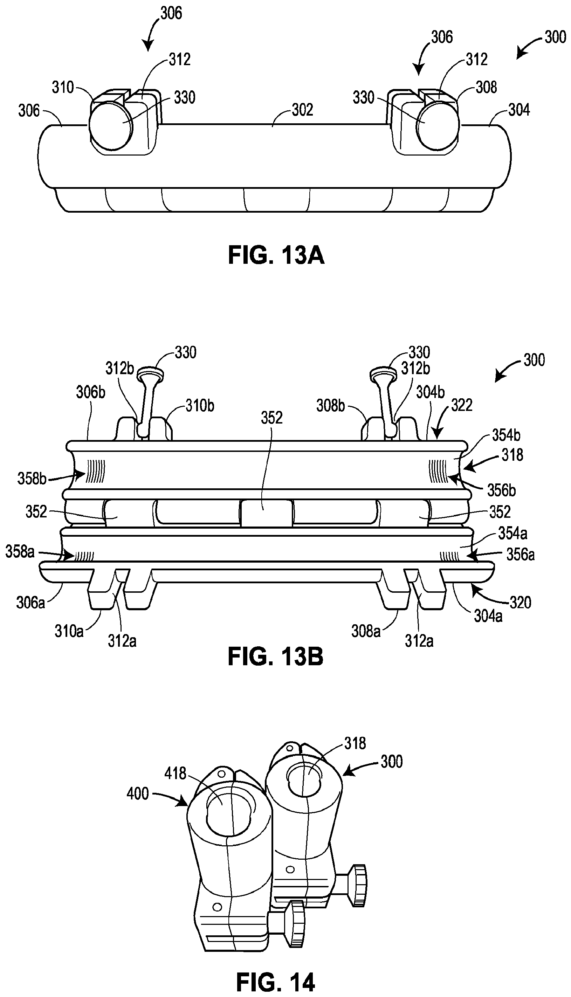

Referring now to FIGS. 13A-14, another tubing support device 300 according to another aspect of the present disclosure is depicted. The tubing support device 300 includes many features similar to or the same as the tubing support device 100 of FIGS. 5-8. Thus, parts of the tubing support device 300 that are the same as parts of the tubing support device 100 are numbered 100 more than the parts of the tubing support device 100. Unlike the tubing support device 100 of FIGS. 5-8, which includes a C-shape design, for example, the tubing support device 200 is a sleeve and includes a rectangular, cylindrical shape. In addition, there is no third projection extending from a body of the tubing support device 300. Further differences between the tubing support device 300 and the tubing support device 100 will be further described and understood below.

Referring now to FIGS. 13A and 13B, the tubing support device 300 includes a body 302 having a first end 304 and a second end 306. The body 302 also includes a plurality of projections 306 including a first projection 308 disposed at the first end 304 and a second projection 310 disposed at the second end 306. Each of the first and second projections 308, 310 includes an aperture 312 adapted to receive a fastener, such as the fastener 130 described above relative to the tubing support device 100. As depicted in FIGS. 13B and 14, a bore 318 extends along a length of the body 302, from the first end 304 to the second end 306. The bore 318 is also adapted to receive tubing such that the body 302 reinforces the tubing, allowing the tubing to contain fluid at high pressures and/or preventing kinking in the welded tubing. In one example, the first projection 308 upwardly extends from the first end 304 of the body 202. In addition, the second projection 310 likewise upwardly extends from the second end 306 of the body 202.

Referring now to FIG. 13B, the body 302 further includes a first body part 320 and a second body part 322 that is adapted to be coupled to the first body part 320 to form the body 302 of FIG. 13A. As depicted in FIG. 13B, the first body part 320 includes a first end 304a, a second end 306a, a first projection 308a disposed on the first end 304a, and a second projection 310a disposed on the second end 306a. Each of the first and second projections 308a, 310a includes an aperture 312a adapted to receive a fastener, as explained more below. The second body part 322 likewise includes a first end 304b, a second end 306b, a first projection 308b disposed on the first end 304b, and a second projection 310b disposed on the second end 306b. Each of the first and second projections 308b, 310b of the second body part 322 also includes an aperture 312b.

The second body part 322 is again complementary in shape to the first body part 320. In one example, each of the first and second body parts 320, 322 of the body 302 is rectangular in shape. It will be understood that the first and second body parts 320, 322 may alternatively take the form of various other shapes and still fall within the scope of the present disclosure. The apertures 312a of the first and second projections 308a, 310a of the first body part 320 align with the apertures 312b of the first and second projections 308b, 310b of the second body part 322 when the first and second body parts 320, 322 are coupled together. This allows a fastener 330 to be disposed in the apertures 312a of the first body part 320 and through the apertures 312b of the second body part 322 to secure the first and second body parts 320, 322 together.

In this example, the body 302 of the tubing support device 300 is a sleeve. The first body part 320 is a first half of the sleeve and the second body part 322 is the second half of the sleeve. When the first and second body parts 320, 322 are coupled together, the first and second body parts 320, 322 of the body 302 form the bore 318 adapted to receive the tubing. In addition, and in one example, the second body part 322 is further coupled to the first body part 320 by at least one hinge 352 disposed in a bottom area of each of the first body part 320 and the second body part 322. In this example, three hinges 352 are disposed on the bottom areas of the first and second body parts 320, 322 and rotatably couple the first and second body parts 320, 322 together, which are further secured to each other via the fasteners 330, as explained above.

In one example, the body 302 of the tubing support device 300 includes an additively manufactured body 302. The first body part 320 is an additively manufactured first body part 320, and the second body part 322 is likewise an additively manufactured second body part 322. The additively manufactured body 302 and the additively manufactured first and second body parts 320, 322 may be additively manufactured accordingly to any known additive manufacturing technique, such as using as 3D printer, as described more below. Alternatively, the body 302 of the tubing support device 300 may be made by injection molding, casting, or any other readily available and known manufacturing process and still fall within the scope of the present disclosure.

In another example, each of the first body part 320 and the second body part 322 includes an inside surface with at least one ridge. In particular, the first body part 320 includes an inside surface 354a, and the second body part includes an inside surface 354b, as depicted in Fig. 13B. A plurality of ridges is disposed on the inside surface 354a of the first body part 320 at both the first and second ends 304a, 306a of the first body part 320. In this example, a first plurality of ridges 356a is disposed on the inside surface 354a at the first end 304a of the first body part 320, and a second plurality of ridges 358a is disposed on the inside surface 354a at the second end 306a of the first body part 320. Likewise, a plurality of ridges is also disposed on the inside surface 354b of the second body part 322 at each of the first and second ends 304b, 306b. In this example, a first plurality of ridges 356b is disposed on the inside surface 354b at the first end 304b of the second body part 322, and a second plurality of ridges 358b is disposed on the inside surface 3454b at the second end 306b of the second body part 322.

Each plurality of ridges 356a, 356b, 358a, 358b helps secure a connection between the body 302 of the tubing support device 300, which may be a sleeve in this example, as noted above, and the tubing 53 (see, e.g., Fig. 4B). In one example, each plurality of ridges 356a, 356b, 358a, 358b may include six ridges. It will be understood that more or fewer ridges may alternatively be used and still fall within the scope of the present disclosure. In addition, while a plurality of ridges 356a, 356b, 358a, 358b is disposed on each of the first end 304a, 304b and the second end 306a, 306b of each of the first and second body parts 320, 322, respectively, it will also be understood that the plurality of ridges 356a, 356b may alternatively be disposed on only one end, such as only the first end 304a, 304b or only the second end 306a, 306b and still fall within the scope of the present disclosure.

Referring now to FIG. 14, the tubing support device 300 of FIGS. 13A and 13B is depicted, along with another exemplary tubing support device 400. The tubing support device 400 includes all of the same features as the tubing support device 300, except the tubing support device 400 is a larger device. In particular, a diameter of a bore 418 of the tubing support device 400 is larger than the diameter of the bore 318 of the tubing support device 300 of FIGS. 13A and 13B. Thus, the tubing support devices may be sized to fit the dimensions of the various sized tubing, such as welded tubing, adapted to be disposed within the bore of the tubing support devices, for example.

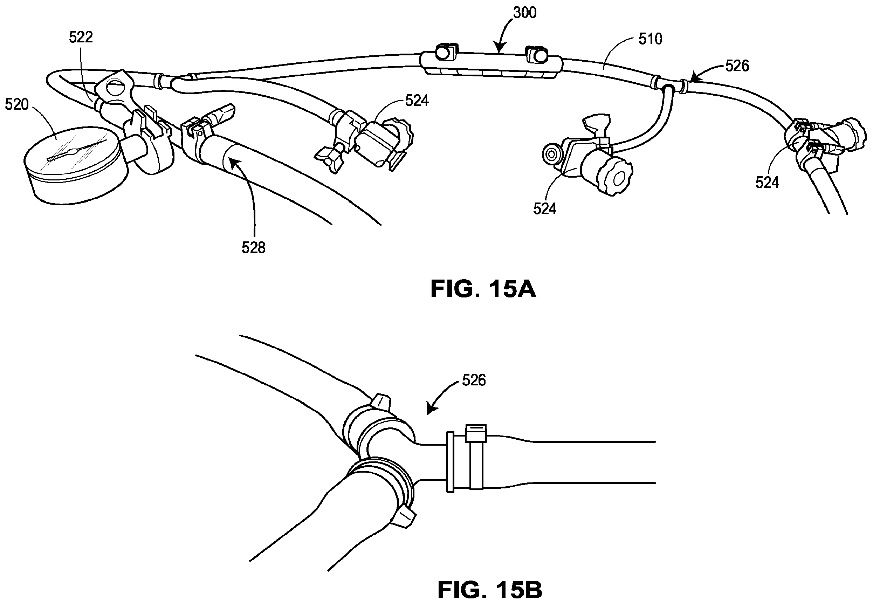

Referring now to FIGS. 15A-17C, various experimental tests were conducted using the tubular support device 300 as an example support device to ensure the tubing disposed within the tubing support device 300 may safely be operated at a pressure equal to or greater than 58 PSI. An experimental set-up of a first experiment is depicted in FIGS. 15A and 15B. In this first experiment, the tubing is welded #73 c-flex tubing 510 and the tubing support device 300 is a size #73 tubing support device 300. The experimental set-up also includes a Quattro flow pump 520, at least one pressure gauge 522, several valves 524, such as ¾" valves, and zip ties 526. More specifically, a recirculation loop using the C-flex tubing is developed and depicted in FIG. 15A. The recirculation loop includes a DIW supply vessel 528 connected in series of the Quattro flow pump 520, the pressure gauge 522, the tubing support device 300, and the valves 524. The tubing support device 300 was fastened over the welded tubing 510. During testing at 20 PSI and 30 PSI, there was no observable leaking in the welding tubing 510. At 40 PSI, a zip tie broke and a leak was detected (the welded tubing 510 within the tubing support device 300 was connected to hose barbs with only a single cable tie). After reinforcement with additional zip ties, no other leaking or zip tie breaks occurred at 40 PSI. During testing at 50 PSI, there was again no observable leaking, and at 60 PSI the tubing at the zip ties interfaces experienced notable swelling, as depicted in FIG. 15B, for example.

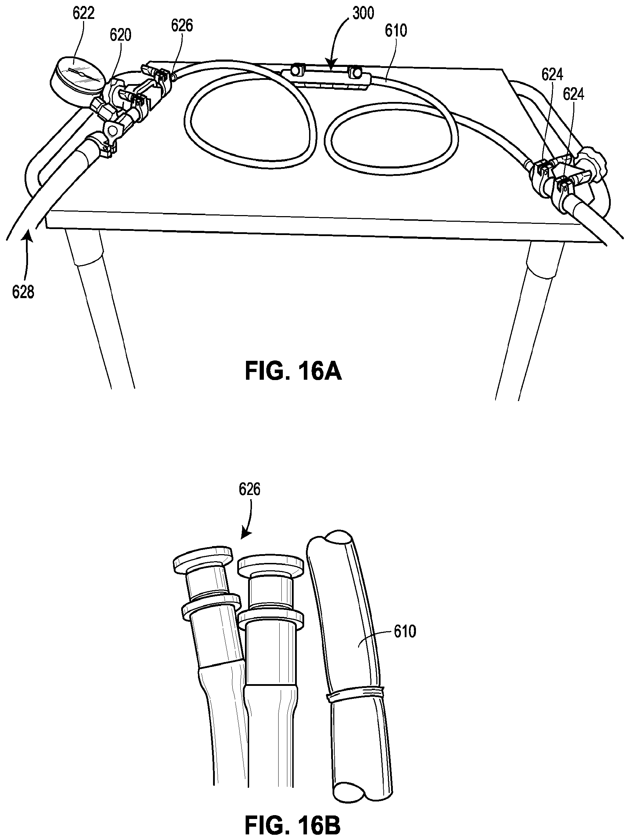

Referring now to FIGS. 16A and 16B, a second experiment was conducted again using the tubing support device 300, but thermoplastic sleeves instead of zip ties. In the second experiment, PureWeld #73 tubing 610, including welded tubing, is used along with a Quattro flow pump 620, a pressure gauge 622, at least one ¾" valve 624, the tubing support device 300, and thermoplastic sleeves 626. Specifically, a recirculation loop using PureWeld tubing was developed. The loop includes a DIW supply vessel 628 connected in series to the Quattro flow pump 620, the pressure gauge 622, the tubing support device 300, and the valve 624. The tubing support device 300 was fastened over the welded tubing 610. During testing, there was no observable swelling or leaking in the welded tubing from 20 PSI to 75 PSI pressures. At 85 PSI, tubing swelled around connector joints; however, the welded tubing did not exhibit any signs of leaking or swelling.

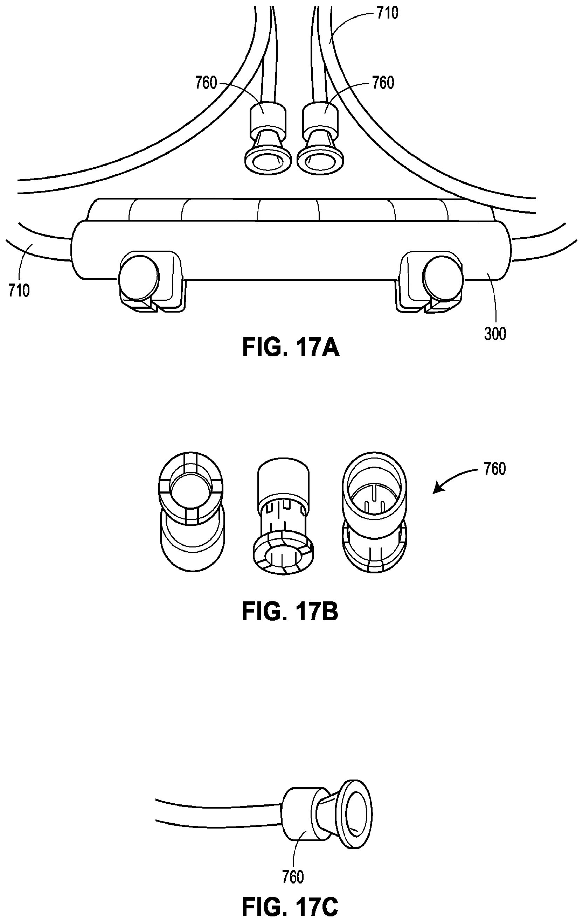

Referring now to FIGS. 17A-17C, a third experiment was conducted using the tubing support device 300 and barblocks, rather than cable ties. In the third experiment, PureWeld #24 tubing 710, including welded tubing, was used along with the Quattro flow pump 620, the pressure gauge 622, ½" valves, a size #24 tubing support device 300, and barblocks 760. More specifically, a recirculation loop using the PureWeld tubing 710 was developed. The loop included the DIW supply vessel 628 connected in series to the Quattro pump 620 (FIG. 16A), the pressure gauge 622, the tubing support device 300, and the valves 626 (FIG. 16). During testing, pressure was maintained at 80 PSI for 15 minutes and then at 75 PSI for 120 minutes. Results indicated that when pressure was maintained at any point within the range of 20 PSI to 75 PSI, there was no observable swelling or leaking in the welded tubing 710. When pressure was maintained at 80 PSI, there was again no observable swelling or leaking in the welded tubing.

Fourth and fifth experiments were conducted on the welded tubing without using the tubing support device 300. For example, in a fourth experiment, a recirculation loop using #24 PureWeld tubing was developed, and the loop again included the DIW supply vessel connected in series to the Quattro pump, pressure gauge, tubing assembly, and valves. The tubing support device was not used. Pressure was maintained at 90 PSI for 10 minutes and at 85-90 PSI for 15 minutes. Results indicated that there was no observable swelling or leaking when pressure was applied at any value in the 20 PSI to 75 PSI range. In addition, some extremely minor swelling around connector joints less than a couple of millimeters occurred when pressure was applied at 90 PSI. In the fifth experiment, a recirculation loop using #73 PureWeld tubing, e.g., welded tubing, was developed, and the loop again included the DIW supply vessel connected in series to the Quattro pump, pressure gauge, tubing assembly, and valves. The tubing support device was not used. Results indicated that the welded tubing could not withstand 90 PSI for more than a few minutes. Significant swelling in the welded tubing was observed. The barblocks did not have any observable swelling.

The experimental results of the five experiments indicate pressure rating is dependent upon the tubing type, connectors, and use of the tubing support device 300, for example. In addition, the data suggests that a pressure rating of 4 bar is achievable with PureWeld welded tubing size #24 (without the tubing support device, e.g., such as an exoskeleton) and size #73 with the tubing support device 300. Specifically, in the first and second experiments, PureWeld #73 tubing support device 300 with thermoplastic sleeves is suitable to achieve operating pressures of 4 bar, and thermoplastic sleeves provide more system isolation based on static pressure tests, reducing exposure of the system to the environment. For the third and fourth experiments, PureWeld #24 tubing with welded portion in tubing support device 300 and barblocks is suitable to achieve operating pressures of 4 bar. PureWeld #24 tubing with welds and barblocks can sustain 1.5X operating pressure (60 PSI) to a maximum of 90 PSI, without the tubing support device 300. In addition, PureWeld #73 tubing welds and barblocks without the tubing support device 300 could not withstand 90 PSI, and there was minute swelling around the barblocks.

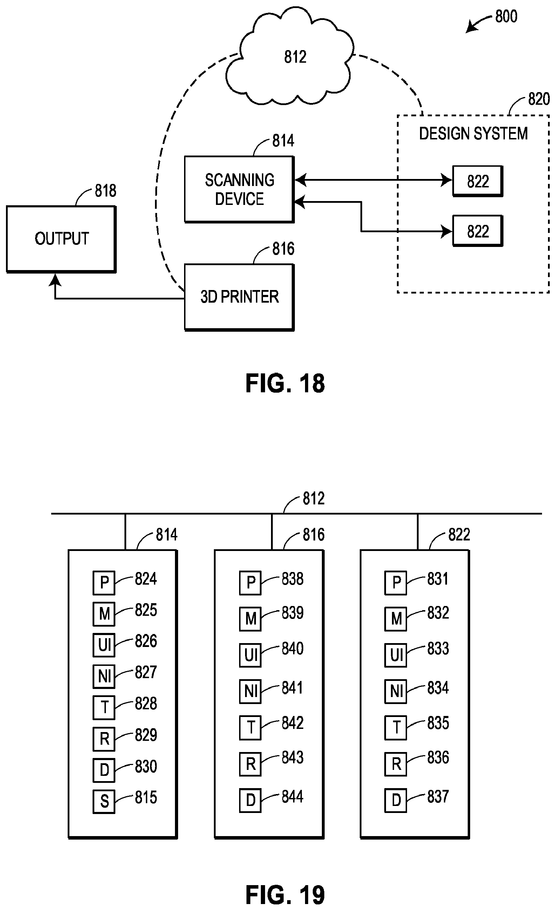

Referring now to Fig. 18, a system 800 for additively manufacturing any one of the foregoing tubing support devices 100, 200, 300 is depicted. The system 800 may include a communication network 812, a scanning device 814 communicatively coupled to the communication network 812, such as a wireless network, and a design system 820 also communicatively coupled to the scanning device 814 and the communication network 812. In one example, the scanning device 814 may scan a portion of the tubing, such as welded tubing, or another part of the drug substance manufacturing system needing reinforcement to create a tubing-specific scan for the tubing support device 100, 200, 300. The scanning device 814 may include one or more various known computing devices, such as an iPad, an iPod, an iPhone or any other smart phone, tablet or other device having such scanning capabilities, for example. In some examples, the tubing-specific scan may later be used to make the tubing support device via a 3D printer, as described more below.

The system 800 further includes a 3D printer 816, which additively manufactures the tubing support device 100, 200, 300, and an output delivery center 818 for delivery of a final and complete tubing support device 100, 200, 300. The system 800 further includes the design system 820 communicatively coupled to both the scanning device 814 and the 3D printer 816. In one example, the design system 820 is communicatively coupled via the communication network 812, such as wireless network 812. As depicted, the design system 820 includes one or more computing devices 822 that may receive data specific to the tubing support device 100, 200, 300, such as data corresponding to a scan of the welded tubing portion via the scanning device 814. At least one computing device 822 of the design system 820 may then send the tubing-specific design to the 3D printer 816, such as via the wireless network 812, directing the 3D printer 816 to additively manufacture one of the foregoing tubing support devices 100, 200, 300.

Referring now to FIG. 19, in one example, the scanning device 814 includes one or more processors 824 that implement a scanning module stored in a memory 825 of the scanning device 814. The scanning device 814 may also include a user-input 826 and a network interface 827, which allows the scanning device 814 to be communicatively coupled to the wireless network 812, for example, and communicate with the design system 820. The scanning device 814 further includes a transmitter 828 and a receiver 829, such that the transmitter 828 may transmit scanned data corresponding to the tubing-specific scan (e.g., of the desired welded tubing) to the design system 820 for processing, as explained more below. Further, the scanning device 814 may also include a display 830 on which the scanned data corresponding to the desired welded tubing may be displayed, for example.

In a similar manner, the one or more computing devices 822 of the system 820 also includes one or more processors 831 that implement a module stored in a memory, such as a memory 832 of the computing device 822, to receive and process data, such as data corresponding to the tubing-specific scan from the scanning device 814. The computing device 822 may also include a user-input 833 and a network interface 834, which allows the computing device to be communicatively coupled to the wireless network 821 and communicate with both the scanning device 814 and the 3D printer 816. The design system computing device 822 may also include a transmitter 835 and a receiver 836, such that the transmitter 835 transmits processed data relative to a tubing-specific scan (e.g., from the scanning device 814) or the tubing support device 100, 200, 300 to the 3D printer 816, directing the 3D printer 816 to print a tubing support device according to the data transmitted. The receiver 836 receives scanning data from the scanning device 814, which is processed by one or more processors 831 of the computing device 822 and used to implement the operation of the 3D printer 816. The computing device 822 also includes a display 837, on which data, such as data from the scanning device 814 and data processed by the computing device 822, may be displayed.

Still referring to Fig. 19, the 3D printer 816 is communicatively coupled to both the scanning device 814 and the design system 820. The 3D printer 816 includes one or more processors 838 that implement a tubing support device profile created and then transmitted from the computing device 822 of the design system to the 3D printer 816 and stored in a memory 839 of the 3D printer 816. The tubing support device design profile that may be stored in the memory 839 of the 3D printer 816 includes a design protocol for execution by one or processors 838 of the 3D printer 816. The 3D printer 816 may also include a user-input 840 and a network interface 841, which also allows the 3D printer 816 to be communicatively coupled to the wireless network 812, for example. The 3D printer 816 further includes a transmitter 842, a receiver 843 for receiving data from the design system 820 relative to a tubing support device profile, for example, and a display 844, which may include or be separate from the user-input 840.

Each of the processors 824, 831, and 838 may be a general processor, a digital signal processor, ASIC, field programmable gate array, graphics processing unit, analog circuit, digital circuit, or any other known or later developed processor. The processor 824 of the scanning device 814 may operate pursuant to a profile stored in the memory 825 of the scanning device 814, for example. The memory 825, 832, 839 may be a volatile memory or a non-volatile memory. The memory 825, 832, 839 may include one or more of a read-only memory ("ROM"), random-access memory ("RAM"), a flash memory, an electronic erasable program read-only memory ("EEPROM"), or other type of memory. The memory 825, 832, 839 may include an optical, magnetic (hard drive), or any other form of data storage.

In one example, the tubing support device design protocol is part of the tubing-specific design profile stored on the memory 832, 839 and includes a set of executable instructions that controls the 3D printer 816 to print the tubing support device 100, 200, 300. The tubing support device design protocol may be stored on the memory 832, 839 as computing logic, which includes one or more routines and/or sub-routines, embodied as computer-readable instructions stored on the memory 832, 839. The processor 831, 838 can execute the logic to cause the processor 831, 838 to retrieve the profile and control the 3D printer 816 in accordance with the tubing support device design profile. In particular, the tubing support device design protocol may specify, among other parameters, the size, shape and/or volume of the tubing support device and the timing of the 3D printing.

In view of the foregoing, it will be appreciated that the tubing support devices 54, 100, 200, 300 of the present disclosure may be manufactured according to the following exemplary method. In particular, and in one example, a method of manufacturing the tubing support device for the drug manufacturing system 50 comprises forming a body 102, 202, 302 including a bore 118, 218, 318 and a plurality of projections 106, 206, the bore 118, 218, 318 extending along a length of the body 102, 202, 302 and adapted to receive tubing 52 (FIG. 4A) of the drug manufacturing system 50 for reinforcing the welded tubing 52 and preventing kinking of the welded tubing 52 during high pressure operations. The method further includes forming an aperture 112, 112a, 112b, 212, 312 in at least one projection 108, 110, 208, 210, 308, 310 of the plurality of projections.

In some examples, forming the body 102, 202, 302 including a bore 118, 218, 318 and a plurality of projections 106, 206 comprise forming the body 102, 202, 302 using an additive manufacturing technique, such as any of those described herein. In another example, forming the body 102, 202, 302 including a bore 118, 218, 318 comprises forming a first body part 120 having a first end 104a, a second end 106a, a first projection 108a disposed on the first end 104a, and a second projection 110a disposed on the second end 106a. In addition, the method further comprises forming a second body part 122 having a first end 104b, a second end 106b, a first projection 108b disposed on the first end 104b, and a second projection 110b disposed on the second end 106b, the second body part 122 being a second half of the body 102. In addition, in one example, forming the second body part 122 having the first end 104b, the second end 106b, a first projection 108b disposed on the first end 104b, and a second projection 110b disposed on the second end 106b comprises forming the second body part 122 having a shape complementary to the first body part 120. The method may still further include forming the first body part 120, 220 using an additive manufacturing technique and forming the second body part 122, 222 using an additive manufacturing technique.

In another example, forming a body 102 having a plurality of projections comprises forming a first tab 124a, 124b disposed at a first end 104a, 104b of the body 102 and a second tab 126a, 126b disposed at the second end 106b of the body 102, and forming a slot 128a, 128b in each of the first and second tabs 124a, 124b, 126a, 126b, the slot 128a, 128b for receiving a fastener for hanging the body 102. Further, forming a body 102, 202 having a plurality of projections 106, 206 comprises forming a first projection 108, 208 disposed at a first end 104, 204 of the body 102, 202, forming a second projection 110, 210 disposed at a second end 106, 206 of the body 102, 202, and forming a third projection 114, 214 upwardly extending from a center portion of the body 102, 202.

Still further, and in yet another example, forming the body 202 having a plurality of projections 206 comprises forming the body 202 having an inside surface 232 with a gripping system 234 having a first array of teeth 236 disposed near a first end 204 of the body 202 and a second array of teeth 238 disposed on the inside surface 232 near the second end 206 of the body 202, disposing each of the first and second arrays of teeth 236, 238 around the inside surface 232 of the body 202.

In one example, each of the acts of the method of manufacturing described above may use one or more additive manufacturing techniques. Generally, the additive manufacturing technique may be any additive manufacturing technique or process that builds three-dimensional objects by adding successive layers of material on a material. The additive manufacturing technique may be performed by any suitable machine, such as the 3D printer 816 (FIG. 18), or combination of machines, such as the system 800 described above. The additive manufacturing technique may typically involve or use a computer, three-dimensional modeling software (e.g., Computer Aided Design, or CAD, software), machine equipment, and layering material. Once a CAD model is produced, the machine equipment may read in data from the CAD file and layer or add successive layers of liquid, powder, sheet material (for example) in a layer-upon-layer fashion to fabricate a three-dimensional object. The additive manufacturing technique may include any of several techniques or processes, such as, for example, a stereolithography ("SLA") process, a fused deposition modeling ("FDM") process, multi-jet modeling ("MJM") process, a selective laser sintering ("SLS") process, an electronic beam additive manufacturing process, and an arc welding additive manufacturing process. In some embodiments, the additive manufacturing process may include a directed energy laser deposition process. Such a directed energy laser deposition process may be performed by a multi-axis computer-numerically-controlled ("CNC") lathe with directed energy laser deposition capabilities.

Moreover, the tubing support devices 100, 200, 300 may be made from a variety of robust materials including, but not limited to, VeroWhitePlus (RDG835), and the material finish is smooth, which is compliant with GMP manufacturing. The type of material used and finish may be different from this exemplary material, as long as the material is robust, and still fall within the scope of the present disclosure. In addition, in some examples, the size of the tubing support device 100, 200, 300 is half the size and lighter in weight, such as up to a 40% reduction in weight, when compared to traditional weld reinforcement devices, due at least in part to the material being using and additive manufacturing techniques for the same. As noted above, the size of the tubing support device 100, 200, 300 may be adapted to a variety of tubing.

In view of the foregoing, the following advantages of the tubing support device 100, 200, 300 and method of manufacturing the same will be understood. For example, the tubing support device 100, 200, 300 enables the tubing to contain fluid at significantly higher pressures, such as up to 85 PSI, with no observable adverse effects. This allows welded tubing to be commonly used in future single use manufacturing systems. In addition to enhancing pressure rating, the tubing support device 100, 200, 300 also elevates tubing off of another surface to enhance sterility and prevent kinking in the welded tubing. Due to additive manufacturing techniques and materials used, the tubing support device 100, 200, 300 is also about half the size and up to nearly 40% lighter in weight than conventional weld reinforcements. Furthermore, the tubing support device 100, 200, 300 mitigates the need for additional support tubing and zip ties, for example, commonly used in conventional systems and any malformation while tubing is draped over reactors and other system components.

While the invention has been shown and described in connection with various preferred embodiments, it is apparent that certain changes and modifications, in addition to those mentioned above, may be made. This patent covers all embodiments of the teachings of the disclosure that fairly fall within the scope of the appended claims.

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (*e.g.*, volatile memory, non-volatile memory, or a combination thereof), registers, or other machine components that receive, store, transmit, or display information.

As used herein any reference to "one implementation," "one embodiment," "an implementation," or "an embodiment" means that a particular element, feature, structure, or characteristic described in connection with the implementation is included in at least one implementation. The appearances of the phrase "in one implementation" or "in one embodiment" in various places in the specification are not necessarily all referring to the same implementation.

Some implementations may be described using the expression "coupled" along with its derivatives. For example, some implementations may be described using the term "coupled" to indicate that two or more elements are in direct physical or electrical contact. The term "coupled," however, may also mean that two or more elements are not in direct contact with each other, but yet still co-operate or interact with each other. The implementations are not limited in this context.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the implementations herein. This is done merely for convenience and to give a general sense of the invention. This description should be read to include one or at least one and the singular also includes the plural unless it is obvious that it is meant otherwise.

## Claims

1. A tubing support device (100, 200, 300) for tubing of a drug manufacturing system in combination with such a tubing, the tubing support device comprising:
a body (102, 202, 302) having a first end (104, 204, 304), a second end (106, 206, 306), and a plurality of projections, the plurality of projections including a first projection (108, 208, 308) disposed at the first end and a second projection (110, 210, 310) disposed at the second end, each of the first and second projections including an aperture (112, 212, 312) adapted to receive a fastener, wherein the body further includes a first body part (120, 220, 320) and a second body part (122, 222, 322) coupled to the first body part, each of the first and second body parts including a first end, a second end, a first projection disposed on the first end, and a second projection disposed on the second end, each of the projections including an aperture; and
a bore (118, 218, 318) extending from the first end to the second end of the body, the bore receiving said tubing from said first end to said second end such that the body reinforces the tubing, thereby allowing the tubing to contain fluids at high pressures and/or preventing kinking in the tubing;
wherein the body includes one of:
a) an inside surface (232) having a gripping system (234) adapted to contact the tubing for additional securement of the tubing within the body, the gripping system including a first array of teeth (236) disposed on the inside surface near the first end of the body and a second array of teeth (238) disposed on the inside surface near the second end of the body; and
b) an inside surface (354a, 354b) having a plurality of ridges (356a, 356b, 358a, 358b) at the first and second ends of the body, the plurality of ridges adapted to contact the tubing for additional securement of the tubing within the body.

2. The tubing support device of claim 1, where the second body part is complementary in shape to the first body part, such that the apertures of the first and second projections of the second body part are aligned with the apertures of the first and second projections of the first body part when the first and second body parts are coupled together.

3. The tubing support device of either of claims 1 or 2, wherein the body is a sheath and includes a C-shape, and the first body part is a first half of the sheath and the second body part is a second half of the sheath, each of the first and second body parts having the same shape and forming the bore when coupled together.

4. The tubing support device of any one of claims 1 and 2, wherein the plurality of projections further includes a third projection (114) upwardly extending from a center portion of the body, the third projection including an aperture (116) adapted to receive a fastener.

5. The tubing support device of claim 4, wherein the body is a sleeve having a cylindrical shape, and the body includes the gripping system.

6. The tubing support device of claim 5, wherein at least one tooth of the first and second arrays of teeth includes a base (242) having a first side (244) inwardly extending from the base and a second side (246) inwardly extending from the base, the first and second sides forming an edge (250) for gripping the tubing when the tubing is disposed within the bore, and wherein the first and second arrays of teeth each extend around the inside surface of the bore near each of the first and second ends of the body.

7. The tubing support device of any one of the previous claims, where the body includes an additively manufactured body comprising an additively manufactured first body part and an additively manufactured second body part coupled to the additively manufactured first body part.

8. A drug manufacturing system (50), comprising:
one or more manufacturing components (51); and
one or more fluid lines (52) fluidly coupled to the one or more manufacturing components, wherein the one or more fluid lines include the tubing having the tubing support device of any of claims 1-7.

9. The system of claim 8, wherein the body further includes a first body part and a second body part coupled to the first body part, each of the first and second body parts including a first end, a second end, a first projection disposed on the first end, and a second projection disposed on the second end, each of the projections including an aperture having a fastener.

10. A method of manufacturing a tubing support device (100, 200, 300) for a drug manufacturing system in combination with such a tubing, the method comprising:
forming a body (102, 202, 302) including a bore (118, 218, 318), a plurality of projections, a first body part and a second body part coupled to the first body part, each of the first and second body parts including a first end, a second end, a first projection disposed on the first end, and a second projection disposed on the second end, each of the projections including an aperture, the bore extending along the length of the body and receiving said tubing from said first end to said second end for reinforcing the tubing and preventing kinking of the tubing during high pressure operations; and
forming an aperture (112, 212, 312) in at least one projection of the plurality of projections, the aperture adapted to receive a fastener;
wherein forming the body including a bore and a plurality of projections comprises forming a body having an inside surface with one of:
a) a gripping system (234) having a first array of teeth (236) disposed near a first end of the body and a second array of teeth (238) disposed on the inside surface near the second end of the body, disposing each of the first and second arrays of teeth around the inside surface of the body; or
b) a first plurality of ridges (356a, 356b, 358a, 358b) disposed near a first end of the body and a second plurality of ridges disposed near a second end of the body.

11. The method of claim 10, wherein forming a body including a bore and plurality of projections comprises forming a body including a bore and a plurality of projections having an aperture in at least one projection using an additive manufacturing technique.

12. The method of any one of claims 10 and 11, wherein forming a body including a bore and a plurality of projections comprises:
forming a first body part (120, 220, 320) having a first end, a second end, a first projection disposed on the first end, and a second projection disposed on the second end, the first body part being a first half of the body; and
forming a second body part (122, 222, 322) having a first end, a second end, a first projection disposed on the first end, and a second projection disposed on the second end, the second body part being a second half of the body.

13. The method of any one of claims 10-12, wherein forming a body including a bore and a plurality of projections further comprises forming a first tab (124a, 124b) disposed at a first end of the body and a second tab (126a, 126b) disposed at the second end of the body, and forming a slot in each of the first and second tabs, the slot for receiving a fastener for hanging the body.

## Patentansprüche

1. Rohrstützvorrichtung (100, 200, 300) für Rohre eines Arzneimittelfertigungssystems in Kombination mit einem solchen Rohr, wobei die Rohrstützvorrichtung Folgendes umfasst:
einen Körper (102, 202, 302) mit einem ersten Ende (104, 204, 304), einem zweiten Ende (106, 206, 306) und einer Vielzahl von Vorsprüngen, wobei die Vielzahl von Vorsprüngen einen ersten Vorsprung (108, 208, 308), der an dem ersten Ende angeordnet ist, und einen zweiten Vorsprung (110, 210, 310) beinhaltet, der an dem zweiten Ende angeordnet ist, wobei jeder aus dem ersten und zweiten Vorsprung eine Öffnung (112, 212, 312) beinhaltet, die angepasst ist, um eine Befestigungsvorrichtung aufzunehmen, wobei der Körper ferner einen ersten Körperteil (120, 220, 320) und einen zweiten Körperteil (122, 222, 322) beinhaltet, der an den ersten Körperteil gekoppelt ist, wobei jeder aus dem ersten und zweiten Körperteil ein erstes Ende, ein zweites Ende, einen ersten Vorsprung, der an dem ersten Ende angeordnet ist, und einen zweiten Vorsprung, der an dem zweiten Ende angeordnet ist, beinhaltet, wobei jeder der Vorsprünge eine Öffnung beinhaltet; und
eine Bohrung (118, 218, 318), die sich von dem ersten Ende zu dem zweiten Ende des Körpers erstreckt, wobei die Bohrung das Rohr von dem ersten Ende zu dem zweiten Ende aufnimmt, sodass der Körper das Rohr verstärkt, wodurch zugelassen wird, dass das Rohr Fluide mit hohen Drücken enthält und/oder ein Abknicken des Rohrs verhindert wird;
wobei der Körper eines aus Folgendem beinhaltet:
a) eine Innenfläche (232) mit einem Greifsystem (234), das angepasst ist, um das Rohr für eine zusätzliche Befestigung des Rohrs in dem Körper zu kontaktieren, wobei das Greifsystem eine erste Anordnung von Zähnen (236), die an der Innenfläche nahe dem ersten Ende des Körpers angeordnet ist, und eine zweite Anordnung von Zähnen (238) beinhaltet, die an der Innenfläche nahe dem zweiten Ende des Körpers angeordnet ist; und
b) eine Innenfläche (354a, 354b) mit einer Vielzahl von Rillen (356a, 356b, 358a, 358b) an dem ersten und zweiten Ende des Körpers, wobei die Vielzahl von Rillen angepasst ist, um das Rohr für eine zusätzliche Befestigung des Rohrs in dem Körper zu kontaktieren.

2. Rohrstützvorrichtung nach Anspruch 1, wobei der zweite Körperteil eine komplementäre Form zum ersten Körperteil aufweist, sodass die Öffnungen des ersten und zweiten Vorsprungs des zweiten Körperteils angeordnet sind mit den Öffnungen des ersten und zweiten Vorsprungs des ersten Körperteils, wenn der erste und zweite Körperteil zusammengekoppelt sind.

3. Rohrstützvorrichtung nach Anspruch 1 oder 2, wobei der Körper eine Umhüllung ist und eine C-Form beinhaltet, und der erste Körperteil eine erste Hälfte der Umhüllung ist und der zweite Körperteil eine zweite Hälfte der Umhüllung ist, wobei jeder aus dem ersten und zweiten Körperteil die gleiche Form aufweist und die Bohrung bildet, wenn sie zusammengekoppelt sind.

4. Rohrstützvorrichtung nach einem der Ansprüche 1 und 2, wobei die Vielzahl von Vorsprüngen ferner einen dritten Vorsprung (114) beinhaltet, der sich von einem Mittelabschnitt des Körpers nach oben erstreckt, wobei der dritte Vorsprung eine Öffnung (116) beinhaltet, die angepasst ist, um eine Befestigungsvorrichtung aufzunehmen.

5. Rohrstützvorrichtung nach Anspruch 4, wobei der Körper eine Hülse mit einer zylindrischen Form ist, und der Körper das Greifsystem beinhaltet.

6. Rohrstützvorrichtung nach Anspruch 5, wobei mindestens ein Zahn aus der ersten und zweiten Anordnung von Zähnen eine Basis (242) beinhaltet, mit einer ersten Seite (244), die sich von der Basis nach innen erstreckt, und einer zweiten Seite (246), die sich von der Basis nach innen erstreckt, wobei die erste und zweite Seite eine Kante (250) zum Greifen des Rohrs bilden, wenn das Rohr in der Bohrung angeordnet ist, und wobei sich die erste und zweite Anordnung von Zähnen jeweils um die Innenfläche der Bohrung nahe jedem aus dem ersten und zweiten Ende des Körpers erstrecken.

7. Rohrstützvorrichtung nach einem der vorhergehenden Ansprüche, wobei der Körper einen additiv gefertigten Körper beinhaltet, umfassend einen additiv gefertigten ersten Körperteil und einen additiv gefertigten zweiten Körperteil, der an den additiv gefertigten ersten Körperteil gekoppelt ist.

8. Arzneimittelfertigungssystem (50), umfassend:
eine oder mehrere Fertigungskomponenten (51); und
eine oder mehrere Fluidleitungen (52), die fluidisch mit der einen oder den mehreren Fertigungskomponenten gekoppelt sind, wobei die eine oder mehreren Fluidleitungen das Rohr mit der Rohrstützvorrichtung nach einem der Ansprüche 1-7 beinhalten.

9. System nach Anspruch 8, wobei der Körper ferner einen ersten Körperteil und einen zweiten Körperteil beinhaltet, der an den ersten Körperteil gekoppelt ist, wobei jeder aus dem ersten und zweiten Körperteil ein erstes Ende, ein zweites Ende, einen ersten Vorsprung, der an dem ersten Ende angeordnet ist, und einen zweiten Vorsprung, der an dem zweiten Ende angeordnet ist, beinhaltet, wobei jeder aus den Vorsprüngen eine Öffnung mit einer Befestigungsvorrichtung beinhaltet.

10. Fertigungsverfahren für eine Rohrstützvorrichtung (100, 200, 300) für ein Arzneimittelfertigungssystem in Kombination mit einem solchen Rohr, wobei das Verfahren Folgendes umfasst:
Bilden eines Körpers (102, 202, 302) einschließlich einer Bohrung (118, 218, 318), einer Vielzahl von Vorsprüngen, eines ersten Körperteils und eines zweiten Körperteils, der an den ersten Körperteil gekoppelt ist, wobei jeder aus dem ersten und zweiten Körperteil ein erstes Ende, ein zweites Ende, einen ersten Vorsprung, der an dem ersten Ende angeordnet ist, und einen zweiten Vorsprung, der an dem zweiten Ende angeordnet ist, beinhaltet, wobei jeder der Vorsprünge eine Öffnung beinhaltet, wobei sich die Bohrung entlang der Länge des Körpers erstreckt und das Rohr von dem ersten Ende zu dem zweiten Ende aufnimmt, um das Rohr zu verstärken und ein Abknicken des Rohrs während Hochdruckbetrieb zu verhindern; und
Bilden einer Öffnung (112, 212, 312) in mindestens einem Vorsprung aus der Vielzahl von Vorsprüngen, wobei die Öffnung angepasst ist, um eine Befestigungsvorrichtung aufzunehmen;
wobei das Bilden des Körpers einschließlich einer Bohrung und einer Vielzahl von Vorsprüngen das Bilden eines Körpers mit einer Innenfläche mit einem aus Folgendem umfasst:
a) einem Greifsystem (234) mit einer ersten Anordnung von Zähnen (236), die nahe einem ersten Ende des Körpers angeordnet ist, und einer zweiten Anordnung von Zähnen (238), die an der Innenfläche nahe dem zweiten Ende des Körpers angeordnet ist, wobei jede aus der ersten und zweiten Anordnung von Zähnen um die Innenfläche des Körpers angeordnet wird; oder
b) einer ersten Vielzahl von Rillen (356a, 356b, 358a, 358b), angeordnet nahe einem ersten Ende des Körpers, und einer zweiten Vielzahl von Rillen, angeordnet nahe einem zweiten Ende des Körpers.

11. Verfahren nach Anspruch 10, wobei das Bilden eines Körpers einschließlich einer Bohrung und einer Vielzahl von Vorsprüngen das Bilden eines Körpers umfasst, einschließlich einer Bohrung und einer Vielzahl von Vorsprüngen mit einer Öffnung in mindestens einem Vorsprung unter Verwendung einer additiven Fertigungstechnik.

12. Verfahren nach einem der Ansprüche 10 und 11, wobei das Bilden eines Körpers einschließlich einer Bohrung und einer Vielzahl von Vorsprüngen Folgendes umfasst:
Bilden eines ersten Körperteils (120, 220, 320) mit einem ersten Ende, einem zweiten Ende, einem ersten Vorsprung, der an dem ersten Ende angeordnet ist, und einem zweiten Vorsprung, der an dem zweiten Ende angeordnet ist, wobei der erste Körperteil eine erste Hälfte des Körpers ist, und
Bilden eines zweiten Körperteils (122, 222, 322) mit einem ersten Ende, einem zweiten Ende, einem ersten Vorsprung, der an dem ersten Ende angeordnet ist, und einem zweiten Vorsprung, der an dem zweiten Ende angeordnet ist, wobei der zweite Körperteil eine zweite Hälfte des Körpers ist.

13. Verfahren nach einem der Ansprüche 10-12, wobei das Bilden eines Körpers einschließlich einer Bohrung und einer Vielzahl von Vorsprüngen ferner das Bilden einer ersten Lasche (124a, 124b), angeordnet an einem ersten Ende des Körpers, und einer zweiten Lasche (126a, 126b), angeordnet an dem zweiten Ende des Körpers, und das Bilden eines Schlitzes in jedem aus der ersten und zweiten Lasche umfasst, wobei der Schlitz der Aufnahme einer Befestigungsvorrichtung zum Aufhängen des Körpers dient.

## Revendications

1. Dispositif de support de tuyau (100, 200, 300) pour un tuyau d'un système de fabrication de médicament combiné à un tel tuyau, le dispositif de support de tuyau comprenant :
un corps (102, 202, 302) comprenant une première extrémité (104, 204, 304), une deuxième extrémité (106, 206, 306) et une pluralité de protubérances, la pluralité de protubérances comprenant une première protubérance (108, 208, 308) située à la première extrémité et une deuxième protubérance (110, 210, 310) située à la deuxième extrémité, chacune des première et deuxième protubérances comprenant une ouverture (112, 212, 312) adaptée à recevoir une fixation, le corps comprenant en outre une première partie de corps (120, 220, 320) et une deuxième partie de corps (122, 222, 322) accouplée à la première partie de corps, chacune des première et deuxième parties de corps comprenant une première extrémité, une deuxième extrémité, une première protubérance située sur la première extrémité et une deuxième protubérance située sur la deuxième extrémité, chacune des protubérances comprenant une ouverture, et
un alésage (118, 218, 318) s'étendant de la première extrémité à la deuxième extrémité du corps, l'alésage recevant ledit tuyau de ladite première extrémité jusqu'à ladite deuxième extrémité, le tuyau se trouvant renforcé par le corps, lui permettant ainsi de contenir des fluides à haute pression et/ou l'empêchant de se plier,
le corps comprenant :
a) une surface intérieure (232) comprenant un système de serrage (234) adapté à entrer en contact avec le tuyau afin d'assurer une fixation supplémentaire du tuyau à l'intérieur du corps, le système de serrage comprenant un premier ensemble de dents (236) situé sur la surface intérieure à proximité de la première extrémité du corps et un deuxième ensemble de dents (238) situé sur la surface intérieure à proximité de la deuxième extrémité du corps, ou
b) une surface intérieure (354a, 354b) comprenant une pluralité de nervures (356a, 356b, 358a, 358b) aux première et deuxième extrémités du corps, la pluralité de nervures étant adaptée à entrer en contact avec le tuyau afin d'assurer une fixation supplémentaire du tuyau à l'intérieur du corps.

2. Dispositif de support de tuyau selon la revendication 1, dans lequel la deuxième partie de corps présente une forme complémentaire à celle de la première partie de corps, si bien que les ouvertures des première et deuxième protubérances de la deuxième partie de corps sont en alignement avec les ouvertures des première et deuxième protubérances de la première partie de corps lorsque les première et deuxième parties de corps sont accouplées l'une à l'autre.

3. Dispositif de support de tuyau selon la revendication 1 ou 2, dans lequel le corps est une gaine et présente une forme en C, et la première partie de corps est une première moitié de la gaine et la deuxième partie de corps est une deuxième moitié de la gaine, chacune des première et deuxième parties de corps présentant la même forme et constituant l'alésage lorsqu'elles sont accouplées l'une à l'autre.

4. Dispositif de support de tuyau selon l'une quelconque des revendications 1 et 2, dans lequel la pluralité de protubérances comprend en outre une troisième protubérance (114) s'étendant vers le haut à partir d'une portion centrale du corps, la troisième protubérance comprenant une ouverture (116) adaptée à recevoir une fixation.

5. Dispositif de support de tuyau selon la revendication 4, dans lequel le corps est un manchon de forme cylindrique et le corps comprend le système de serrage.

6. Dispositif de support de tuyau selon la revendication 5, dans lequel au moins une dent des premier et deuxième ensembles de dents comprend une base (242) comprenant un premier côté (244) s'étendant vers l'intérieur à partir de la base et un deuxième côté (246) s'étendant vers l'intérieur à partir de la base, les premier et deuxième côtés formant un bord (250) destiné à serrer le tuyau lorsque celui-ci est disposé à l'intérieur de l'alésage, et le premier et le deuxième ensemble de dents s'étendant chacun autour de la surface intérieure de l'alésage à proximité de chacune des première et deuxième extrémités du corps.

7. Dispositif de support de tuyau selon l'une quelconque des revendications précédentes, dans lequel le corps comprend un corps fabriqué de manière additive comprenant une première partie de corps fabriquée de manière additive et une deuxième partie de corps fabriquée de manière additive accouplée à la première partie de corps fabriquée de manière additive.

8. Système de fabrication de médicament (50) comprenant :
un ou plusieurs composants de fabrication (51), et
une ou plusieurs conduites de fluide (52) accouplées en communication fluidique au(x) composant(s) de fabrication, la ou les conduites de fluide comprenant le tuyau présentant le dispositif de support de tuyau selon l'une quelconque des revendications 1 à 7.

9. Système selon la revendication 8, dans lequel le corps comprend en outre une première partie de corps et une deuxième partie de corps accouplée à la première partie de corps, chacune des première et deuxième parties de corps comprenant une première extrémité, une deuxième extrémité, une première protubérance située sur la première extrémité et une deuxième protubérance située sur la deuxième extrémité, chacune des protubérances comprenant une ouverture comportant une fixation.

10. Procédé de fabrication d'un dispositif de support de tuyau (100, 200, 300) pour un système de fabrication de médicament combiné à un tel tuyau, le procédé comprenant :
la formation d'un corps (102, 202, 302) comprenant un alésage (118, 218, 318), une pluralité de protubérances, une première partie de corps et une deuxième partie de corps accouplée à la première partie de corps, chacune des première et deuxième parties de corps comprenant une première extrémité, une deuxième extrémité, une première protubérance située sur la première extrémité et une deuxième protubérance située sur la deuxième extrémité, chacune des protubérances comprenant une ouverture, l'alésage s'étendant sur la longueur du corps et recevant ledit tuyau de ladite première extrémité jusqu'à ladite deuxième extrémité afin de renforcer le tuyau et d'empêcher son pliage au cours d'exploitations à haute pression, et
la formation d'une ouverture (112, 212, 312) dans au moins une protubérance parmi la pluralité de protubérances, l'ouverture étant adaptée à recevoir une fixation ;
ladite formation du corps doté d'un alésage et d'une pluralité de protubérances comprenant la formation d'un corps présentant une surface intérieure dotée :
a) d'un système de serrage (234) comprenant un premier ensemble de dents (236) situé à proximité d'une première extrémité du corps et un deuxième ensemble de dents (238) situé sur la surface intérieure à proximité de la deuxième extrémité du corps, chacun des premier et deuxième ensembles de dents étant situé autour de la surface intérieure du corps, ou
b) d'une première pluralité de nervures (356a, 356b, 358a, 358b) situées à proximité d'une première extrémité du corps et une deuxième pluralité de nervures situées à proximité d'une deuxième extrémité du corps.

11. Procédé selon la revendication 10, dans lequel la formation d'un corps doté d'un alésage et d'une pluralité de protubérances comprend la formation d'un corps doté d'un alésage et d'une pluralité de protubérances comprenant une ouverture dans au moins une protubérance au moyen d'une technique de fabrication additive.

12. Procédé selon l'une quelconque des revendications 10 et 11, dans lequel la formation d'un corps doté d'un alésage et d'une pluralité de protubérances comprend :
la formation d'une première partie de corps (120, 220, 320) comprenant une première extrémité, une deuxième extrémité, une première protubérance située sur la première extrémité et une deuxième protubérance située sur la deuxième extrémité, la première partie de corps constituant une première moitié du corps, et
la formation d'une deuxième partie de corps (122, 222, 322) comprenant une première extrémité, une deuxième extrémité, une première protubérance située sur la première extrémité et une deuxième protubérance située sur la deuxième extrémité, la deuxième partie de corps constituant une deuxième moitié du corps.

13. Procédé selon l'une quelconque des revendications 10 à 12, dans lequel la formation d'un corps doté d'un alésage et d'une pluralité de protubérances comprend en outre la formation d'une première languette (124a, 124b) située à une première extrémité du corps et d'une deuxième languette (126a, 126b) située à la deuxième extrémité du corps, et la formation d'une fente dans chacune des première et deuxième languettes, la fente étant destinée à recevoir une fixation permettant de suspendre le corps.
